# EUROPÄISCHE PATENTSCHRIFT

(11) **EP 1 252 810 B1**
(45) Veröffentlichungstag und Bekanntmachung des Hinweises auf die Patenterteilung: **05.04.2006**
(21) Anmeldenummer: 02006309.5
(22) Anmeldetag: 21.03.2002
(51) Int. Cl.: A01D 34/76, A01D 34/66

(54) **Antriebssystem einer Mähvorrichtung**
Drive system of a mowing device
Système d'entraînement d'un dispositif faucheur

(30) Priorität: 28.04.2001 DE 10121015
(43) Veröffentlichungstag der Anmeldung: 30.10.2002
(73) Patentinhaber: DEERE & COMPANY, Moline, Illinois 61265-8098 (US)
(72) Erfinder: Franet, Roger, 57200 Sarreguemines (FR); Guiet, Lionel, 70100 Gray (FR); Defrancq, Hubert, 02190 Guignicourt (FR); Kern, Daniel, 02160 Moulins (FR)
(74) Vertreter: Magin, Ludwig Bernhard

(56) Entgegenhaltungen:
- EP-A- 0 808 556
- DE-A- 19 620 071
- US-A- 5 069 022

## Beschreibung

Die Erfindung betrifft ein Antriebssystem einer Mähvorrichtung mit wenigstens zwei Mäheinheiten mit jeweils einem Getriebe zum Antrieb eines Mähwerks oder dergleichen mit einer Eingangswelle und einem weiteren Getriebe mit einer Ausgangswelle, wie aus dem Dokument DE-A-196 20 071 bekannt.

Es ist bekannt, drei Mäheinheiten an einem gemeinsamen Träger zu befestigen und an einen selbstfahrenden Feldhäcksler anzuschließen (CLAAS High Output Mowing Widths, ohne Druckvermerk). Jede der Mäheinheiten weist im Bereich der Fahrzeugmitte ein seitliches Zugmittelgetriebe auf, über das ein Mähwerk und gegebenenfalls eine Erntegutbearbeitungsvorrichtung angetrieben werden kann. Die Getriebe jeder Mäheinheit sind individuell ausgebildet und angeordnet.

Das der Erfindung zugrunde liegende Problem wird darin gesehen, dass die bekannte Ausbildung eines Antriebssystems zu hohen Kosten und einer praktisch nicht realisierbaren Austauschbarkeit der Mäheinheiten in einem Schadensfall führt.

Dieses Problem wird erfindungsgemäß durch die Lehre des Patentanspruchs 1 gelöst, wobei in den weiteren Patentansprüchen Merkmale aufgeführt sind, die Lösung in vorteilhafter Weise weiterentwickeln.

Auf diese Weise können die Mäheinheiten untereinander ausgetauscht werden, während das für die jeweilige Mäheinheit erforderliche Getriebe beibehalten wird, das aufgrund der stets gleichen Anordnung der Getriebe nahtlos in den im übrigen erhaltenen Antriebsstrang passt. Die Trennung des weiteren Getriebes von der Mäheinheit ist aufgrund der Flanschanordnung leicht möglich. Die Verwendung der Gelenkwelle lässt eine Bewegung der Mäheinheiten gegenüber dem hauptsächlichen Getriebe zu.

Wenn wenigstens ein weiteres Getriebe mit einer Eingangswelle auf jeder Seite eines Getriebegehäuses versehen ist, kann das gleiche Getriebe sowohl bei einer von rechts als auch bei einer von links angetriebenen Mäheinheit verwendet werden, wie dies der Fall ist, wenn die Mähvorrichtung eine linke und eine rechte Mäheinheit aufweist, die von einem dazwischengelegenen hauptsächlichen Getriebe aus angetrieben werden.

Die Ausbildung eines, mehrerer oder aller weiteren Getriebe als Schwenkgetriebe, z. B. mit zwei um eine Achse relativ zueinander schwenkbaren Winkelgetrieben, hat den Vorteil, dass das weitere Getriebe für alle Mäheinheiten gleich ausgebildet sein kann, weil die Eingangswelle an der Lage des hauptsächlichen Getriebes ausgerichtet werden kann.

Wenn das hauptsächliche Getriebe auf einem Tragteil befestigt ist, und zwar insbesondere lösbar, der zwar mit den Mäheinheiten verbunden und sich mit diesen in der Arbeitshöhe verstellt, diesen gegenüber aber verstellbar ist und somit z. B. bei der Einstellung des Schnittwinkels nicht mitbewegt wird, werden die Abstands- und Winkeländerungen zwischen den beteiligten Ausgangs- und Eingangswellen relativ gering gehalten.

Dadurch, dass wenigstens ein weiteres Getriebe und das hauptsächliche Getriebe als austauschbare Winkelgetriebe mit drei in einer T-Konfiguration angeordneten Ein- bzw. Ausgangswellen ausgebildet sind, wird sogar eine Austauschbarkeit des hauptsächlichen und eines oder mehrerer weiterer Getriebe erreicht, was zu einer weiteren Reduktion der Teilevielfalt führt und im Bedarfsfall ein Austauschgetriebe zur Verfügung stellt.

Eine durch ein Getriebegehäuse des hauptsächlichen Getriebes verlaufende Welle, die sowohl als Eingangswelle für das hauptsächliche Getriebe als auch als Ausgangswelle für zwei Mäheinheiten dient, ist deshalb vorteilhaft, weil sie die Antriebskraft einer oder mehrerer Mäheinheiten nicht in das hauptsächliche Getriebe ein- sondern durch dieses hindurchleitet. Hierdurch kann eine kleinere Dimensionierung erfolgen.

Eine außermittige Anordnung des hauptsächlichen Getriebes macht es möglich, dass eine Stellvorrichtung, etwa ein oberer Lenker, ein Gestänge oder dergleichen, die dazu benutzt werden, die Mäheinheit an einem sie aufnehmenden Tragteil zu halten, nicht in Kollision mit dem hauptsächlichen oder weiteren Getriebe bzw. einer zu oder von ihm führenden Gelenkwelle gerät. Alternativ könnte das Getriebe mittig und der Lenker oder dergleichen außermittig angeordnet sein.

Die Verwendung von Gelenkwellen mit oder ohne Weitwinkelgelenken zwischen einem Getriebe und einem weiteren Getriebe hat den Vorteil, dass auch ein Versatz der Anschlussstellen möglich ist. Zudem können Gelenkwellen schnell und ohne Werkzeug montiert und demontiert werden, sodass ein Austausch der Getriebe schnell vonstatten gehen kann.

Zu- und abschaltbare Zugmittelgetriebe bieten zweierlei Vorteile - einmal dienen mit Riemen versehene Zugmittelgetriebe als Überlastsicherung und zum zweiten kann der Antrieb unterbrochen werden, was insbesondere dann wichtig ist, wenn die Mäheinheit in eine Transportposition gebracht ist, während eine oder mehrere andere Mäheinheiten noch in Betrieb sind.

Stirnrad- oder Zugmittelgetriebe sind insofern sinnvoll, als sie schlank bauen, günstig in der Herstellung sind und Eingangs- bzw. Ausgangswellen auf beiden Seiten des Getriebegehäuses zulassen.

In der Zeichnung ist ein nachfolgend näher beschriebenes Ausführungsbeispiel der Erfindung dargestellt. Es zeigt:
- Fig. 1: eine Mähvorrichtung in Draufsicht,

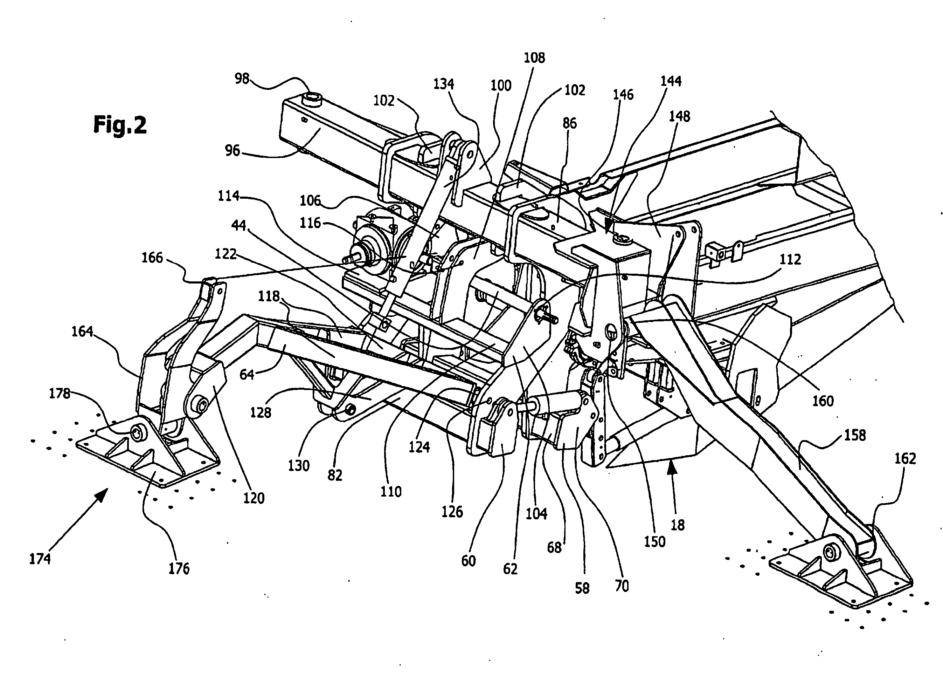

- Fig. 2: einen Teil der Mähvorrichtung in perspektivischer Ansicht von vorne und
- Fig. 3: einen Teil der Mähvorrichtung in Seitenansicht.

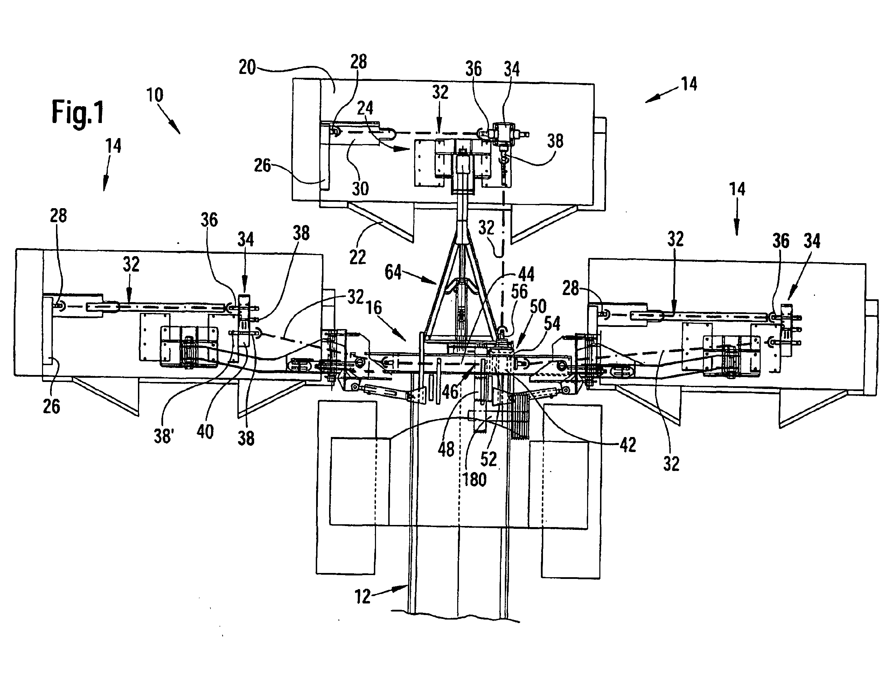

Figur 1 zeigt eine erfindungsgemäße Mähvorrichtung 10 an einem Trägerfahrzeug 12 mit mehreren Mäheinheiten 14 auf einem gemeinsamen Träger 16.

Die Mähvorrichtung 10 dient dem Mähen von Gras oder anderem Erntegut und weist im Betrieb eine Arbeitsbreite von z. B. neun Metern auf, die wesentlich über der zugelassenen Breite für den Transport auf der Straße liegt. Zum Transport auf der Straße wird die Mähvorrichtung 10 auf eine Breite von maximal drei Metern gebracht, wie dies nachfolgend beschrieben wird.

Das Trägerfahrzeug 12 kann als ein Ackerschlepper mit Frontkraftheber oder mit Rückwärtsfahreinrichtung ausgebildet sein; es kann sich aber auch um einen Feldhäcksler, einen Mähdrescher oder um ein eigens für das Mähen ausgebildetes selbstfahrendes Fahrzeug oder andere handeln. In dem dargestellten Ausführungsbeispiel handelt es sich um einen selbstfahrenden Feldhäcksler mit einer frontseitigen Hubvorrichtung 18 in einer Bauweise, wie sie von Feldhäckslern der Firma John Deere bekannt ist.

Die. Mäheinheiten 14 sind nahezu identisch ausgebildet und in der Art eines bekannten Frontmähwerks gehalten. In nicht gezeigter Weise ist jede Mäheinheit 14 mit einem Mähwerk versehen, das z. B. als Scheibenmähwerk, Trommelmähwerk oder als Messerbalken ausgeführt sein kann. Wahlweise kann stromabwärts auf das Mähwerk eine Aufbereitungsvorrichtung, z. B. eine Stängelknickvorrichtung oder dergleichen folgen. Jedenfalls enthält jede Mäheinheit 14 ein Gehäuse 20, eine rückwärtige Schwadeinrichtung 22, einen Flanschbereich 24 und ein Getriebe 26.

Das Gehäuse 20 ist im wesentlichen in bekannter Bauart ausgeführt und besteht aus einem Schraub- oder Schweißzusammenbau aus Blechen und Rohren, der seitlich von Kunststoffschürzen umgeben ist und oben eine feste Decke bildet.

Die Schwadeinrichtung 22 gibt das gemähte und evtl. bearbeitete Erntegut an der Rückseite der Mäheinheit 14 auf den Boden ab und besteht im einfachsten Fall aus vertikal ausgerichteten konvergierenden Schwadblechen. In einem nicht dargestellten Ausführungsbeispiel ist anstelle der Schwadbleche ein Transportband, eine Transportschnecke oder dergleichen vorgesehen, die das Erntegut in einem Schwad mittig oder außermittig zu der Mäheinheit 14 auf den Boden ablegen.

Der Flanschbereich 24 befindet sich möglichst nahe des Schwerpunktes der Mäheinheit 14 und kann Gewindebohrungen, Schnappverschlüsse, Hakenverschlüsse oder dergleichen aufweisen. In dem dargestellten Ausführungsbeispiel wird der Flanschbereich 24 von zwei gleich großen Flanschflächen mit jeweils gleichem Lochbild von acht Gewindelöchern gebildet.

Das Getriebe 26 befindet sich in dem vorliegenden Ausführungsbeispiel jeweils auf der in Fahrtrichtung gesehen linken Seite der Mäheinheit 14 und dient dem Antrieb des Mähwerks und der evtl. vorhandenen Aufbereitungsvorrichtung. Hierzu weist das Getriebe 26 eine Eingangswelle 28 und ein nicht gezeigtes Zugmittel, z. B. einen Riemen oder eine Kette, auf. Vor der Eingangswelle 28 ist eine Vertiefung 30 für eine Gelenkwelle 32 vorgesehen, wobei die Vertiefung 30 nicht zwangsläufig vorgesehen sein muss.

Gegenüber dem Getriebe 26 befindet sich ein weiteres Getriebe 34 mit einer Ausgangswelle 36 und einer Eingangswelle 38. Dieses weitere Getriebe 34 ist außermittig in bezug auf die Mährichtung der Mäheinheit 14 angeordnet und in diesem Ausführungsbeispiel ebenfalls lösbar an dem Flanschbereich 24 befestigt, was jedoch nicht zwingend ist. Gemäß der Draufsicht in Figur 1 werden zwei unterschiedliche Bauarten von weiteren Getrieben 34 verwendet. Auf der vorgelagerten und in diesem Fall mittigen Mäheinheit 14 wird ein als Winkelgetriebe ausgebildetes, und auf den seitlichen Mäheinheiten 14 wird ein als Stirnrad- oder Zugmittelgetriebe ausgebildetes, weiteres Getriebe 34 verwendet. Die Eingangswelle 38 des als Stirnrad- oder Zugmittelgetriebe ausgebildeten weiteren Getriebes 34 erstreckt sich durch ein Getriebegehäuse 40 hindurch und bietet auf beiden Seiten einen Stummel zur Aufnahme einer Gelenkwelle 32. Aus rein technischen Gesichtspunkten wäre es möglich, stattdessen zwei schwenkbar miteinander verbundene Winkelgetriebe zu verwenden, bei denen die Eingangs- und die Ausgangswelle 38 und 36 beliebige Stellungen zueinander einnehmen können. In jedem Fall ist die Ausgangswelle 36 über die Gelenkwelle 32 mit der Eingangswelle 28 des Getriebes 26 antriebsmäßig, wenn auch trennbar verbunden. Die Ausgangswelle 36 liegt in diesem Ausführungsbeispiel bei jeder Mäheinheit in der gleichen Ebene wie die Eingangswelle 28 des Getriebes 26, gesehen quer zur Mährichtung. Wenn auch deren vertikale Fluchtung angestrebt wird, so ist in dem vorliegenden Ausführungsbeispiel dennoch ein geringer vertikaler Versatz vorgesehen, wobei die Neigung der Gelenkwelle 32 dadurch ermöglicht wird, dass sie in die Vertiefung 30 eintaucht. Die Eingangswelle 38 verläuft bei dem als Winkelgetriebe ausgebildeten weiteren Getriebe 34 senkrecht zu der Ausgangswelle 36.

An, in bzw. auf dem Träger 16 befindet sich ein hauptsächliches Getriebe 42, das als ein Winkelgetriebe der T-Konfiguration ausgebildet ist. Das hauptsächliche Getriebe 42 wird von einer Welle 44 durchdrungen, die sowohl als Eingangs- wie auch als Ausgangswelle dient. Auf der Welle 44 ist ein Antriebsrad 46 eines zu dem Trägerfahrzeug 12 führenden Zugmittelgetriebes 48 drehfest montiert. In einem Getriebegehäuse 50 ist auf die Welle 44 ein als Kegelrad ausgebildetes Zahnrad 52 drehfest aufgesetzt, das mit einem rechtwinklig dazu angeordneten ebenfalls als Kegelrad ausgebildeten Zahnrad 54 kämmt. Das Zahnrad 54 sitzt auf einer Ausgangswelle 56, die senkrecht zu der Welle 44 verläuft und sich zu dem weiteren Getriebe 34 auf der vorderen Mäheinheit 14 erstreckt. Die beiden als Winkelgetriebe ausgebildeten weiteren und hauptsächlichen Getriebe 34 und 42 können wie im vorliegenden Ausführungsbeispiel gleich ausgebildet sein, wobei dann die Ausgangswelle 56 als Eingangswelle und die Welle 44 als Ausgangswelle 36 wirkt.

Alle Eingangswellen 38, Ausgangswellen 36, 56 und Wellen 44 sind mit einem nicht gezeigten und genormten Zahnprofil versehen, auf das eine handelsübliche Gelenkwelle 32 aufgesetzt werden kann. In dem dargestellten Ausführungsbeispiel verlaufen in der Betriebsstellung der Mäheinheiten 14 die quer zur Mährichtung verlaufende Welle 44 und die Eingangswellen 38, sowie die Ausgängswellen 36 und Eingangswellen 28 zueinander versetzt. Hingegen befindet sich die Ausgangswelle 56 des hauptsächlichen Getriebes 42 und die Eingangswelle 38 des als Winkelgetriebe ausgebildeten weiteren Getriebes 34 in einer Flucht. Im allgemeinen ist ein Versatz der Anschlusspunkte innerhalb der für die jeweils verwendeten Gelenkwellen 32 bestehenden Grenzen möglich; im Bedarfsfall können auch Weitwinkelgelenke oder mehrere unter einem Winkel zueinander verlaufende, hintereinander angeordnete Gelenkwellen verwendet werden, die über ein nicht gezeigtes Lager in den Flanschbereichen miteinander drehfest verbunden werden.

Abweichend von der vorherigen Beschreibung könnte der Antrieb der jeweiligen Mäheinheiten 14 auch über einen oder mehrere Hydraulik- oder Elektromotoren erfolgen, wodurch einzelne oder alle Getriebe 26, 34, 42 entfallen könnten.

Nach alledem ergibt sich folgendes Antriebskonzept, wobei von drei Mäheinheiten 14 ausgegangen wird.

Der Antrieb wird von dem Trägerfahrzeug 12 über das Zugmittelgetriebe 48 auf das Antriebsrad 46 eingeleitet, das die Welle 44 in Drehung versetzt. Die Welle 44 ist auf beiden Seiten des Getriebegehäuses 50 drehfest über jeweils eine Gelenkwelle 32 mit der Eingangswelle 38 des als Stirnrad- oder Zugmittelgetriebe ausgebildeten weiteren Getriebes 34 verbunden, wobei bei der linken Mäheinheit 14 der rechts über das Getriebegehäuse 40 überstehende Stummel und bei der rechten Mäheinheit 14 der links über das Getriebegehäuse 40 überstehende Stummel als Eingangswelle 38 verwendet wird. Innerhalb der als Stirnrad- oder Zugmittelgetriebe ausgebildeten weiteren Getriebe 34 erfolgt gegebenenfalls mit einer Über- oder Untersetzung eine Weiterleitung des Antriebs zu der jeweiligen Ausgangswelle 36, die dann wiederum über eine Gelenkwelle 32 mit der Eingangswelle 28 des Getriebes 26 drehfest verbunden ist. Das Getriebe 26 leitet den Antrieb schließlich in das betreffende Mähwerk und die gegebenenfalls vorhandene Aufbereitungsvorrichtung ein. Demnach erfolgt der Antrieb der seitlichen Mäheinheiten 14 - oder falls nur eine einzige seitliche Mäheinheit verwendet wird, deren Antrieb -, ohne das hauptsächliche Getriebe 42 zu belasten. Der Antrieb der mittigen und vorgeschalteten Mäheinheit 14 geht aus von der Welle 44 bzw. dem auf dieser befestigten Zahnrad 52, das über den Formschluss mit dem Zahnrad 54 die Ausgangswelle 56 antreibt. Die Ausgangswelle 56 steht über eine weitere Gelenkwelle 32 mit der Eingangswelle 38 des weiteren Getriebes 34 auf der vorgelagerten Mäheinheit 14 in drehfester Verbindung. Eine weitere Gelenkwelle 32 verbindet die Ausgangswelle 36 des weiteren Getriebes 34 mit der Eingangswelle 28 des Getriebes 26, so dass hierüber der Antrieb des Mähwerks und gegebenenfalls der Aufbereitungsvorrichtung sichergestellt wird.

Die Ausbildung der Getriebe 26 als Zugmittelgetriebe mit Riemen lässt zum einen eine Absicherung des Antriebsstrangs gegen Überlastung zu und ermöglicht es zum anderen, den Antrieb jeder Mäheinheit 14 unabhängig von dem einer anderen Mäheinheit 14 abzuschalten.

Die gewählte Anordnung und Ausbildung der weiteren Getriebe 34 macht es darüber hinaus möglich, eine beschädigte Mäheinheit 14 durch eine andere, z. B. des bestehenden Verbandes, zu ersetzen. Ein Austausch der seitlichen Mäheinheiten 14 ist ohne jegliche Änderungen möglich; ein Austausch der vorderen Mäheinheit 14 gegen eine seitliche ist möglich, indem das als Winkelgetriebe ausgebildete weitere Getriebe 34 gegen ein als Stirnrad- oder Zugmittelgetriebe ausgebildetes weiteres Getriebe 34 oder umgekehrt ausgewechselt wird, was aufgrund der Anordnung und Befestigungsart problemlos möglich ist. Diese Fähigkeit des problemlosen Austausches macht es möglich, schnell auf einen Schaden an einer Mäheinheit 14 zu reagieren, sodaß stets eine dem Trägerfahrzeug 12 vorgelagerte einsetzbare Mäheinheit 14 vorhanden ist. Die Trennung der Mäheinheit 14 von dem Träger 16 erfolgt an dem Flanschbereich 24 mittels nicht gezeigter Schrauben, Bolzen, Haken oder dergleichen.

Der Träger 16 setzt sich aus mehreren Komponenten zusammen, nämlich insbesondere einem ersten Tragteil 58, einem zweiten Tragteil 60, einem dritten Tragteil 62 und einem vierten Tragteil 64, die von dem Trägerfahrzeug 12 getragen und von dessen Hubvorrichtung 18 gegenüber dem Boden in der Höhen verstellt werden. Der Träger 16 bildet mit den Mäheinheiten 14 eine Einheit, die auf dem Boden abgestellt oder von dem Trägerfahrzeug 12 transportiert werden kann.

Der erste Tragteil 58 enthält zwei in der Querrichtung zueinander beabstandete Platten 66, die mittels einer Spange 68 verwindungssteif untereinander verbunden sind. Die Spange 68 steht seitlich über die Platten 66 über und weist einen Anschluss 70 auf. Der Anschluss 70 ist gabelförmig ausgebildet und mit einer nicht näher bezeichneten Öffnung zur Aufnahme eines Bolzens versehen. Jede Platte 66 ist in ihrem oberen Endbereich mit einer Lagerbohrung 72 und an ihrer Rückseite in der unteren Hälfte mit einem Lager 74 versehen, das von einem Rahmen 76 des Trägerfahrzeugs 12 in trennbaren Lagerschalen 78 vertikal schwenkbar aufgenommen wird. Wenn die Lagerschalen 78 getrennt werden, kann der gesamte Träger 16 von dem Trägerfahrzeug 12 gelöst und z. B. durch ein Häckselaggregat ersetzt werden. Das Lager 74 dient zugleich der drehbaren Lagerung einer zu der Welle 44 parallelen Welle des Zugmittelgetriebes 48 auf dem Trägerfahrzeug 12.

Der zweite Tragteil 60 weist in der Seitenansicht von links die Form des oberen Teils eines Fragezeichens auf, enthält ebenfalls zwei Platten 80 und eine Spange 82, die die Platten 80 in deren unteren Endbereich starr miteinander verbindet, seitlich über diese übersteht und endseitig mit einem Anschluss 84 versehen ist. Jede Platte 80 weist in ihrem oberen Endbereich eine vierkantige, insbesondere quadratische Öffnung 86, in ihrem oberen rückwärtigen Bereich eine Lagerbohrung 88, in ihrem unteren Endbereich eine Lagerbohrung 90, sowie im rückwärtigen oberen Bereich unterhalb der Lagerbohrung 88 eine Gabel 92 auf. Der erste und der zweite Tragteil 60 nehmen im zusammengebauten Zustand eine Lage ein, in der sich die Platten 80 des zweiten Tragteils 60 außerhalb der Platten 66 des ersten Tragteils 58 befinden, zu diesen aber einen möglichst kleinen Abstand aufweisen. Die Lagerbohrungen 72, 88 dienen der Aufnahme eines Lagerbolzens 94, sodass der erste und der zweite Tragteil 58, 60 gelenkig miteinander verbunden werden und sich wie eine Schere öffnen oder schließen.

Der zweite Tragteil 60 enthält darüber hinaus einen Querbalken 96, der sich durch die Öffnungen 86 erstreckt und in deren Bereich mit den Platten 80 starr verbunden ist.

Der Querbalken 96 ist als ein Stahlrohr mit quadratischem Querschnitt ausgebildet, das sich bis nahe an die Seitenkanten des Trägerfahrzeugs 12 erstreckt. In den Außenbereichen ist jeweils ein Lagerauge 98 mit einer zumindest im wesentlichen vertikalen Schwenkachse vorgesehen. In der Mitte des Querbalkens 96 und auf seiner Oberseite befindet sich eine Gabel 100 mit Bohrungen 103. An der Rückseite des Querbalkens 96 sind zwei Stege 102 vertikal ausgerichtet angebracht, die parallel zu den Platten 80 verlaufen und zu diesen einen Abstand einhalten, so dass sie die Platten 66 des ersten Tragteils 58 in dem dazwischenliegenden Freiraum aufnehmen und den Lagerbolzen 94 mittragen können. Aufgrund der Verbindung des Querbalkens 96 mit den Platten 80 macht der Querbalken 96 jede Schwenkbewegung des zweiten Tragteils 60 mit.

Der dritte Tragteil 62 hat ungefähr die Gestalt eines Kastens mit Paaren von linken Platten 104, rechten Platten 106 und mittleren Platten 108, die sämtlich parallel zueinander verlaufen und mittels einer vorderen unteren und einer rückwärtigen oberen Spange 110 fest miteinander verbunden, insbesondere verschweißt sind. Jeweils innere Platten der linken und rechten Platten 104 und 106 sind an die Innenseiten der Platten 80 des zweiten Tragteils 60 angeschraubt. Jeweils äußere Platten der linken und rechten Platten 104 und 106 liegen den Außenseiten der Platten 80 gegenüber und sind mit einem Lager 112 zur Aufnahme der Welle 44 versehen. An die Innenseite der inneren der rechten Platten 106 und an die Spange 110 ist eine waagrecht verlaufende Platte 114 angeschweißt, die der vornehmlich lösbaren Aufnahme des hauptsächlichen Getriebes 42 dient. Die mittigen Platten 108 sind im wesentlichen als ein Ring ausgebildet, der einen Innenraum belässt, durch den sich die Welle 44 hindurch erstrecken kann. Dies ist nicht zwingend; vielmehr könnten auch diese Platten 108 vollflächig ausgebildet und mit einem Lager für die Welle 44 ausgestattet sein. Die mittigen Platten 108 weisen einen Abstand zueinander auf und sind in einem vorderen oberen Eckbereich mit Bohrungen 116 versehen. Aufgrund der Verbindung des dritten mit dem zweiten Tragteil 60 und 62 macht der dritte Tragteil 62 die Schwenkbewegung des zweiten Tragteils 60 mit.

Der vierte Tragteil 64 ist in der Form eines Galgens gehalten und hat in der Draufsicht ungefähr die Form eines Dreieckrahmens. Zwei gleiche Schenkel 118 nehmen in einem rückwärtigen und an den zweiten Tragteil 60 angrenzenden Ende einen großen Abstand zueinander ein, während sie in dem vorderen Endbereich zusammenfallen und endseitig eine Gabel 120 aufweisen. Ein Bereich des vierten Tragteils 64 zwischen der Gabel 120 und dem Bereich, in dem die Schenkel 118 zusammenfallen, ist gegenüber den übrigen Bereich der Schenkel 118 um ca. 30 Grad abgewinkelt. Ein dritter Schenkel 122 verbindet die rückwärtigen Enden der beiden Schenkel 118 und verläuft im montierten Zustand parallel zu den Spangen 110 und 82. In den Endbereichen des dritten Schenkels 122 befindet sich jeweils eine Lasche 124 mit einer nicht näher bezeichneten Bohrung, die im montierten Zustand des vierten Tragteils 64 in Deckung mit der Bohrung 90 an dem zweiten Tragteil 60 gebracht werden und mit dieser einen Bolzen 126 aufnehmen kann. Zwischen einem Mittenbereich des dritten Schenkels 122 und dem Verbindungsbereich der Schenkel 118 erstreckt sich ein nach unten durchhängender Tragwinkel 128, der außer an seinen Enden über nicht näher bezeichnete Bleche mit den Schenkeln 118 verbunden ist, und zwar vorzugsweise verschweißt. In dem Eckbereich des Tragwinkels 128 befindet sich eine Bohrung 130. Die Gabel 120 ist mit einer quer zu der Längserstreckung des vierten Tragteils 64 verlaufenden Bohrung 132 versehen. Der vierte Tragteil 64 ist im Betrieb mit dem zweiten Tragteil 60 verbunden, und zwar mittels der Bolzen 126, die durch die Bohrungen 90 gesteckt werden und einer ersten Stellvorrichtung 134, die als eine Schraubspindel oder als Motor, insbesondere als Hydraulikmotor ausgebildet ist. Die Stellvorrichtung 134 wird einenends mittels eines Bolzens in der Gabel 100 an dem zweiten Tragteil 60 und anderenends mittels eines Bolzens in den Bohrungen 130 an dem vierten Tragteil 64 befestigt.

Folgt man der bisherigen Beschreibung ergibt sich ein Träger 16, der sich aus dem ersten bis dem vierten Tragteil 58 bis 64 zusammensetzt.

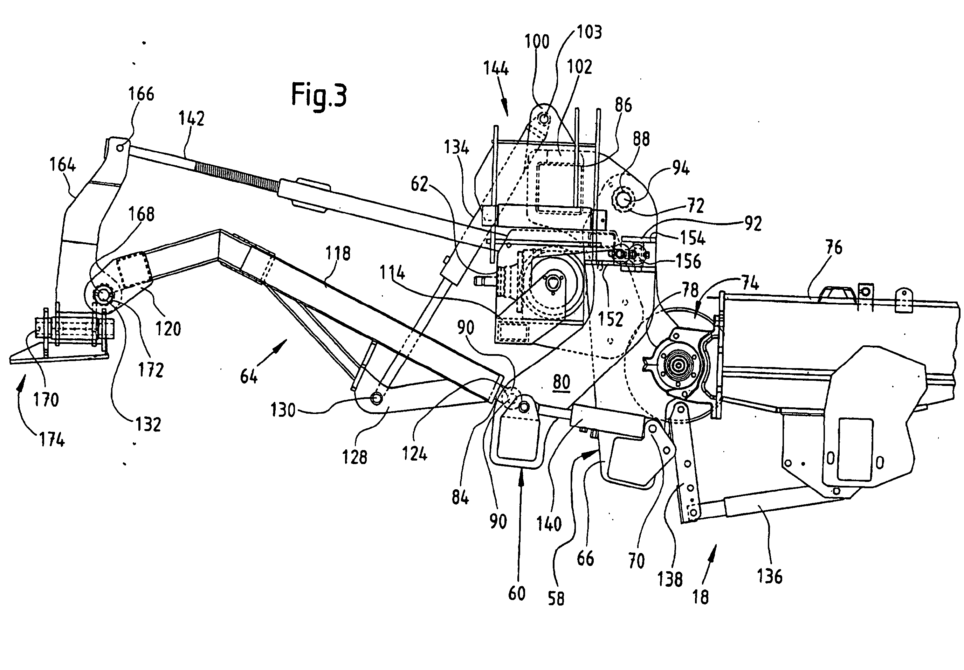

Die Verstellung des Trägers 16 gegenüber dem Trägerfahrzeug 12 erfolgt mittels der Hubvorrichtung 18, die eine zweite Stellvorrichtung 136 vorzugsweise in der Art eines Hydraulikzylinders und einen Schwenkarm 138 aufweist, der einenends um eine quer und horizontal verlaufende Achse an dem Rahmen 76 schwenkbar ist und anderenends von der zweiten Stellvorrichtung 136 beaufschlagt wird, bzw. mit dieser verbunden ist. Der erste Tragteil 58 ist nicht mit dem Schwenkarm 138 oder der zweiten Stellvorrichtung 136 direkt verbunden, sondern liegt lediglich an diesem an. Ein Ausfahren der zweiten Stellvorrichtung 136 bewirkt eine Schwenkbewegung des gesamten Trägers 16 um die Schwenkachse des Lagers 74 im Uhrzeigerdrehsinn mit Blick auf Figur 3; eine Entlastung der zweiten Stellvorrichtung 136 führt zu einer entgegengesetzten Schwenkbewegung des Trägers 16 aufgrund seiner Gewichtskraft.

Eine dritte Stellvorrichtung 140 - ebenfalls vorzugsweise in der Art eines einfachwirkenden Hydraulikmotors - erstreckt sich zwischen den Anschluss 70 an dem ersten Tragteil 58 und dem Anschluss 84 an dem zweiten Tragteil 60 und ist in diesen jeweils mittels nicht gezeigter Bolzen in seinen Endbereichen gesichert.

Schließlich ist eine vierte Stellvorrichtung 142 vorgesehen, die mit ihrem rückwärtigen Endbereich mittels eines nicht gezeigten die Bohrungen 116. der mittigen Platten 108 durchdringenden Bolzens gesichert werden kann. Die vierte Stellvorrichtung 142 kann in einem einfachsten Fall als eine Kette, eine Strebe oder ein sonstiges längenunveränderliches Bauteil ausgebildet sein. In einer sehr komfortablen Ausführungsform kann die Stellvorrichtung 142 aber auch längenveränderlich, z. B. als Hydraulikzylinder ausgebildet sein.

An den Enden des Querbalkens 96 ist jeweils ein kardanischer Gelenkträger 144 vorgesehen, der gedanklich aus zwei U-förmigen Bauteilen zusammengesetzt ist, wobei die "U" jeweils in ihren Bodenbereichen zusammenfallen und um 90 Grad zueinander verdreht sind. Ein innerer und dem Querbalken 96 zugelegener Bereich übergreift mit seinem U den Endbereich des Querbalkens 96, wobei das U in einer horizontalen Richtung offen ist. Die Schenkel weisen ein Lager 146 mit einer im eingebauten Zustand vertikalen Lagerachse auf, das einen nicht bezeichneten und zudem die Lageraugen 98 durchdringenden Bolzen aufnehmen kann. Der dem Querbalken 96 abgelegene Bereich stellt das zweite "U" dar, das in vertikaler Richtung offen ist und Schenkel 148 aufweist, die miteinander fluchtende Bohrungen 150 aufweisen, durch die sich eine horizontale Achse erstreckt. An der Außenseite des rückwärtigen Schenkels 148 befindet sich eine Gabel 152, die sich auf der gleichen Höhe befindet wie eine Gabel 154 an der Außenseite der Platten 80 des zweiten Tragteils 60.

Eine fünfte Stellvorrichtung 156 ist endseitig jeweils in einer der Gabeln 152, 154 schwenkbar gehalten und insbesondere als ein doppelseitig beaufschlagbarer Hydraulikmotor ausgebildet.

Ein Arm 158 für jede seitliche Mäheinheit 14 in der Art eines Rohrs oder rohrähnlichen Schweißzusammenbaus, der ungefähr halb so lange ist wie eine Mäheinheit 14 breit ist, weist einenends ein inneres Lagerauge 160 und anderenends ein äußeres Lagerauge 162 auf, deren Schwenkachsen parallel zueinander verlaufen und die als Lagerfläche z. B. ein eingeschweißtes Rohr enthalten. Auf der Oberseite des Arms 158 sind in Figur 1 angedeutete Lochplatten zur Aufnahme eines Hydraulikmotors einenends vorgesehen, der anderenends zwischen den Platten 148 aufgenommen wird, um die jeweilige seitliche Mäheinheit 14 in der Höhe verstellen bzw. den Bodenunebenheiten anpassen zu können.

Ein Arm 164 für die vordere mittlere Mäheinheit 14 ist ebenfalls als Rohr oder Schweißzusammenbau ausgebildet und weist ein oberes, ein mittleres und ein unteres Lagerauge 166, 168 und 170 auf, wobei die durch das obere und das mittlere Lagerauge 166, 168 verlaufenden Schwenkachsen zueinander parallel und im eingebauten Zustand des Arms 164 auch parallel zu einer durch horizontale Bohrungen 172 in der Gabel 120 verlaufenden Schwenkachse verlaufen. Das obere Lagerauge 166 befindet sich im oberen Endbereich des Arms 164 und das mittlere Lagerauge befindet sich nahe des unteren Endbereichs des Arms 164. Das untere Lagerauge 170 befindet sich im unteren Endbereich des Arm 164 und weist eine im wesentlichen horizontal verlaufende Schwenkachse auf, die gegenüber der des oberen und des mittleren Lagerauges 166, 168 um neunzig Grad versetzt ist. Betrachtet man den Arm 164 im eingebauten Zustand von vorne, dann ist sein oberer Endbereich gegenüber dem Rest um nahezu die Breite des Arms 164 seitlich versetzt. Das obere Lagerauge 166 dient der Verbindung mit der vierten Stellvorrichtung 142, und das mittlere Lagerauge 168 dient dem Anschluss an die Gabel 120, jeweils mittels entsprechender nicht gezeigter Bolzen.

Schließlich sind Anschlusskonsolen 174 vorgesehen, die jeweils eine Platte 176 und ein Lagerauge 178 aufweisen.

Im bevorzugten Ausführungsbeispiel sind die Anschlusskonsolen 174 für alle Mäheinheiten 14 identisch und zwischen den jeweiligen Arm 158 bzw. 164 und die jeweilige Mäheinheit 14 eingefügt. Die Platte 176 ist mit dem Lagerauge 178 starr verbunden, insbesondere verschweißt und weist ein Lochbild auf, das auf ein Lochbild in dem Flanschbereich 24 passt. Das Lagerauge 178 ist so ausgebildet, dass es mittels entsprechender Bolzen mit dem Lagerauge 162 oder 170 verbunden werden kann, wobei die Schwenkachsen in der Mährichtung der Mähvorrichtung 10 verlaufen.

Nach alledem wird die Mähvorrichtung 10 derart zusammengebaut und an den Träger 16 angebracht, dass jede Mäheinheit 14 mit ihrem Flanschbereich 24 zunächst mit der Anschlusskonsole 174, diese mit dem entsprechenden Arm 158, 164, die Arme 158, 164 mit dem vierten Tragteil 64 bzw. dem Querbalken 96 des zweiten Tragteils 60, der zweite Tragteil 60 mit dem ersten Tragteil 58 und der erste Tragteil 58 mit dem Rahmen 76 verbunden wird.

Zum Erreichen der jeweiligen Stellungen der Tragteile 58 bis 64 und der daran angebauten Mäheinheiten 14 werden die Stellvorrichtungen 134, 136, 140, 142 und 156 entsprechend angebaut und soweit erforderlich an ein entsprechendes Stellsystem, z. B. ein Hydrauliksystem, insbesondere des Trägerfahrzeugs 12 angeschlossen.

Schließlich wird das hauptsächliche Getriebe 42 auf den dritten Tragteil 62 montiert und es werden die Antriebsverbindungen gemäß der obigen Beschreibung mittels der Gelenkwellen 32 hergestellt und mit einem nicht gezeigten Antrieb auf dem Trägerfahrzeug 12 verbunden, der z. B. über eine Vorgelegewelle 180 auf das Zugmittelgetriebe 48 eingeleitet wird.

## Patentansprüche

1. Antriebssystem einer Mähvorrichtung (10) mit wenigstens zwei Mäheinheiten (14) mit jeweils einem Getriebe (26) zum Antrieb eines Mähwerks oder dergleichen mit einer Eingangswelle (28) und einem hauptsächlichen Getriebe (42) wobei die Getriebe (26) mehrerer Mäheinheiten (14) gleich angeordnet sind, **dadurch gekennzeichnet, dass** zwischen den Getrieben (26) und dem hauptsächlichen Getriebe (42) jeweils ein weiteres Getriebe (34) in einem Flanschbereich (24) vorgesehen ist, das mit dem hauptsächlichen Getriebe (42) über eine Gelenkwelle (32) verbunden ist.

2. Antriebssystem nach Anspruch 1, **dadurch gekennzeichnet, dass** wenigstens ein weiteres Getriebe (34) mit einer Eingangswelle (38) auf jeder Seite eines Getriebegehäuses (40) versehen ist.

3. Antriebssystem nach Anspruch 1 oder 2, **dadurch gekennzeichnet, dass** wenigstens ein weiteres Getriebe als ein Schwenkgetriebe ausgebildet ist.

4. Antriebssystem nach einem oder mehreren der vorherigen Ansprüche, **dadurch gekennzeichnet, dass** das hauptsächliche Getriebe (42) auf einem mit den Mäheinheiten (14) verbundenen aber diesem gegenüber verstellbaren Tragteil (62) insbesondere lösbar angeordnet ist.

5. Antriebssystem nach einem oder mehreren der vorherigen Ansprüche, **dadurch gekennzeichnet, dass** wenigstens ein weiteres Getriebe (34) und das hauptsächliche Getriebe (42) als gegeneinander austauschbare Winkelgetriebe mit drei in einer T-Konfiguration angeordneten Ein- bzw. Ausgangswellen (38, 36) ausgebildet sind.

6. Antriebssystem nach einem oder mehreren der vorherigen Ansprüche, **dadurch gekennzeichnet, dass** das hauptsächliche Getriebe (42) eine durch dessen Getriebegehäuse (50) verlaufende Welle (44) aufweist, die sowohl als Eingangswelle für das hauptsächliche Getriebe (42) wie auch als Ausgangswelle für zwei Mäheinheiten (14) dient.

7. Antriebssystem nach einem oder mehreren der vorherigen Ansprüche, **dadurch gekennzeichnet, dass** das hauptsächliche Getriebe (42) außermittig auf einem eine Mäheinheit (14) aufnehmenden Tragteil (62) angeordnet ist.

8. Antriebssystem nach einem oder mehreren der vorherigen Ansprüche, **dadurch gekennzeichnet, dass** die Ausgangswelle (36) des weiteren Getriebes (34) und die Eingangswelle . (28) des Getriebes (26) mittels Gelenkwellen (32) verbindbar sind.

9. Antriebssystem nach einem oder mehreren der vorherigen Ansprüche, **dadurch gekennzeichnet, dass** die Getriebe (26) als ausschaltbare Zugmittelgetriebe ausgebildet sind.

10. Antriebssystem nach einem oder mehreren der vorherigen Ansprüche, **dadurch gekennzeichnet, dass** die weiteren Getriebe (34) als Stirnrad- oder Zugmittelgetriebe ausgebildet sind.

## Claims

1. A drive system of a mower device (10) with at least two mower units (14), each with a transmission (26) for driving a mower mechanism or the like with an input shaft (28) and a main transmission (42), wherein the transmissions (26) of a plurality of mower units (14) are laid out in the same way, **characterized in that** a further transmission (34) is provided in a flange region (24) between each of the transmissions (26) and the main transmission (42) and is connected to the main transmission (42) through an articulated shaft (32).

2. A drive system according to claim 1, **characterized in that** at least one further transmission (34) is provided with an input shaft (38) on each side of a transmission housing (40).

3. A drive system according to claim 1 or 2, **characterized in that** at least one further transmission is in the form of a swivelling transmission.

4. A drive system according to one or more of the preceding claims, **characterized in that** the main transmission (42) is disposed, especially releasably, on a support part connected to but adjustable relative to the mower units (14).

5. A drive system according to one or more of the preceding claims, **characterized in that** at least one further transmission (34) and the main transmission (42) are in the form of interchangeable angle transmissions with three input or output shafts (38, 36) arranged in a T configuration.

6. A drive system according to one or more of the preceding claims, **characterized in that** the main transmission (42) has a shaft (44) extending through its transmission housing (50) and serving both as the input shaft for the main transmission (42) and as the output shaft for two mower units (14).

7. A drive system according to one or more of the preceding claims, **characterized in that** the main transmission (42) is arranged off-centre on a support part receiving a mower unit (14).

8. A drive system according to one or more of the preceding claims, **characterized in that** the output shaft (36) of the further transmission (34) and the input shaft (28) of the transmission (26) can be connected by means of articulated shafts (32).

9. A drive system according to one or more of the preceding claims, **characterized in that** the transmissions (26) are in the form of transmissions acting through means in tension, which can be switched off.

10. A drive system according to one or more of the preceding claims, **characterized in that** the further transmissions (34) are in the form of gearwheel transmissions or transmissions acting through means in tension.

## Revendications

1. Système d'entraînement d'une faucheuse (10) comportant au moins deux unités de fauchage (14) munies chacune d'une transmission (26) pour l'entraînement d'un mécanisme de coupe ou similaire avec un arbre primaire (28), et une transmission principale (42), les transmissions (26) de plusieurs unités de fauchage (14) étant agencées de manière identique, **caractérisé en ce que**, dans une zone de flasque entre chacune des transmissions (26) et la transmission principale (42), il est prévu une transmission supplémentaire (34), qui est reliée avec la transmission principale (42) par l'intermédiaire d'un arbre articulé (32).

2. Système d'entraînement selon la revendication 1, **caractérisé en ce qu'**au moins une transmission supplémentaire (34) est munie d'un arbre primaire (38) sur chaque côté d'un carter (40).

3. Système d'entraînement selon la revendication 1 ou 2, **caractérisé en ce qu'**au moins une transmission supplémentaire est conçue sous forme de mécanisme d'orientation.

4. Système d'entraînement selon une ou plusieurs des revendications précédentes, **caractérisé en ce que** la transmission principale (42) est agencée, en particulier de manière amovible, sur un élément de support (62) relié aux unités de fauchage (14), mais réglable par rapport à ceux-ci.

5. Système d'entraînement selon une ou plusieurs des revendications précédentes, **caractérisé en ce qu'**au moins une transmission supplémentaire (34) et la transmission principale (42) sont conçues sous forme d'engrenages coniques, permutables entre eux et comportant trois arbres respectivement primaires et de sortie (38, 36), agencés selon une configuration en T.

6. Système d'entraînement selon une ou plusieurs des revendications précédentes, **caractérisé en ce que** la transmission principale (42) comporte un arbre (44), qui passe à travers le carter (50) de celle-ci et qui est utilisé comme un arbre primaire pour la transmission principale (42) et comme un arbre de sortie pour deux unités de fauchage (14).

7. Système d'entraînement selon une ou plusieurs des revendications précédentes, **caractérisé en ce que** la transmission principale (42) est excentrée sur un élément de support (62) recevant une unité de fauchage (14).

8. Système d'entraînement selon une ou plusieurs des revendications précédentes, **caractérisé en ce que** l'arbre de sortie (36) de la transmission supplémentaire (34) et l'arbre primaire (28) de la transmission (26) peuvent être reliés au moyen d'arbres articulés (32).

9. Système d'entraînement selon une ou plusieurs des revendications précédentes, **caractérisé en ce que** les transmissions (26) sont conçues sous forme d'engrenages débrayables de transmissions par liens flexibles.

10. Système d'entraînement selon une ou plusieurs des revendications précédentes, **caractérisé en ce que** les transmissions supplémentaires (34) sont conçues sous forme d'engrenages cylindriques ou d'engrenages de transmissions par liens flexibles.
